# EUROPEAN PATENT APPLICATION

(11) **EP 2 551 313 A1**
(43) Date of publication of application: **30.01.2013**
(21) Application number: 11176049.2
(22) Date of filing: 29.07.2011
(51) Int. Cl.: C09J 7/00, B05D 1/26, B05D 7/00, C09J 7/02

(54) **Multilayer pressure-sensitive adhesive film**

(71) Applicant: 3M Innovative Properties Company, Saint Paul, MN 55133-3427 (US)
(72) Inventor: Traser, Steffen, 64291 Darmstadt (DE); Forster, Jan Daniel, 52066 Aachen (DE)
(74) Representative: Wilhelm, Stefan

(57) **Abstract**

The present invention relates to a multilayer pressure sensitive adhesive (PSA) film having adhesive properties at its first and second main surface, wherein the film comprises at least two superimposed layers of a polymeric pressure sensitive adhesive foam material and optionally one or more intermediate layers of a polymeric foam material, characterized in that the PSA film is obtainable by a continuous self-metered process comprising the steps of
(a) providing a substrate,
(b) providing two or more coating knives which are offset, independently from each other, from said substrate to form a gap normal to the surface of the substrate,
(c) moving the substrate relative to the coating knives in a downstream direction,
(d) providing curable liquid precursors of the polymeric pressure sensitive adhesive foam materials and optionally of the polymeric foam material to the upstream side of the coating knives thereby coating the two or more precursors through the respective gaps as superimposed layers onto the substrate,
(e) optionally providing one or more protective liners and applying these along the upstream side of the coating knives, and
(f) curing the precursor of the multilayer film thus obtained, wherein a lower layer of the curable liquid precursor is covered by an adjacent upper layer of the curable liquid precursor, essentially without exposing said lower layer of a curable liquid precursor.

## Description

The present invention relates to a multilayer pressure sensitive adhesive (PSA) film having adhesive properties at its first and second main surface, wherein the film comprises at least two superimposed layers of a polymeric pressure sensitive adhesive foam material and optionally one or more intermediate layers of a polymeric foam material. This invention furthermore relates to a method for manufacturing such a pressure sensitive adhesive film.

In the state of the art, numerous PSA-film designs are known. Typically, such an adhesive film, which is also related to as double-sided adhesive tape, consists of a carrier film, which is provided on both its main surfaces with a respective adhesive formulation. The carrier film can be, for example, a polymeric foil or a foam material. Foam carriers may further be laminated with thin polymeric films on one or both sides in order to improve their mechanical resistance. Such products are typically marketed as "mounting strips".

On the other hand, it is known to provide double-sided adhesive tapes which are carrierless. This can be achieved for example by the provision of a pressure sensitive adhesive mass like a butyl-resin or an acrylic foam material. In these cases, the pressure sensitive adhesive mass fulfils the functionality of the carrier material and of the adhesive. The drawback of such a construction is however that due to the uniformity of the material, it is not possible to provide adhesive tapes with different adhesion capabilities on the opposing main surfaces. Furthermore, the mechanical strength of the tape cannot be altered without typically influencing the adhesive properties of the material as well.

A dual-layer pressure sensitive adhesive composition is known from EP 1 538 188 A1. The composition disclosed therein comprises two superimposed layers of a pressure sensitive adhesive composition. This is achieved by providing a first layer and covering this layer with the second composition from a solution or by a co-extrusion process. The adhesive compositions of each layer may be present in the form of an adhesive foam material. In a further step, each of the layers may be cross-linked. This can be carried out individually for each of the layers before they are brought together. Alternatively, the cross-linking may take place with the superimposed layers.

Dual-layer foam tapes of that kind do not fulfil the technical requirements in some application cases. It may be found disadvantageous for example that in order to allow the post cross-linking step, special pressure sensitive adhesive materials need to be provided which still comprise cross-linkable groups. This limits the types of raw materials with which this step can be carried out. Furthermore, the coherence between the two layers may not be satisfying depending on the concentration of cross-linkable groups.

In view of this prior art, the object of the present invention is the provision of a multilayer pressure sensitive adhesive film having a higher coherence between the individual superimposed layers. Furthermore, this PSA film should allow the use of a wider variety of adhesive compositions.

This objective is achieved by a multilayer pressure sensitive adhesive (PSA) film having adhesive properties at its first and second main surface, wherein the film comprises at least two superimposed layers of a polymeric pressure sensitive adhesive foam material and optionally one or more intermediate layers of a polymeric foam material, whereas the PSA film is characterized in that the PSA film is obtainable by a continuous self-metered process comprising the steps of
(a) providing a substrate,
(b) providing two or more coating knives which are offset, independently from each other, from said substrate to form a gap normal to the surface of the substrate,
(c) moving the substrate relative to the coating knives in a downstream direction,
(d) providing curable liquid precursors of the polymeric pressure sensitive adhesive foam materials and optionally of the polymeric foam material to the upstream side of the coating knives thereby coating the two or more precursors through the respective gaps as superimposed layers onto the substrate,
(e) optionally providing one or more protective liners and applying these along the upstream side of the coating knives, and
(f) curing the precursor of the multilayer film thus obtained,

wherein a lower layer of the curable liquid precursor is covered by an adjacent upper layer of the curable liquid precursor, essentially without exposing said lower layer of a curable liquid precursor.

In other words, the inventive PSA film is produced wet in wet by superimposing raw materials of the individual film layers to form a "green" multilayer film in the first step. In the following step, a cross-linking process of the raw materials is carried out in which the multilayer PSA film achieves its final adhesive and coherent characteristics. This method is described in Applicant's copending patent application PCT/US2011/022685 which disclosure is enclosed herewith by reference.

The term superimposed as used above and below means that two or more of the layers of the liquid precursors of the polymeric pressure sensitive adhesive foam material and optionally of the polymeric foam material, are arranged on top of each other. Superimposed liquid precursor layers may be arranged directly next to each other so that the upper surface of the lower layer is abutting the lower surface of the upper layer.

The term adjacent as used above and below refers to two superimposed layers within the precursor multilayer film or the cured multilayer film which are arranged directly next to each other, i.e. which are abutting each other.

The terms top and bottom layers, respectively, are used above and below to denote the position of a liquid precursor layer relative to the surface of the substrate bearing the precursor layer in the process of forming a multilayer film. The precursor layer arranged next to the substrate surface is referred to as bottom layer whereas the precursor layer arranged most distantly from the substrate surface in a direction normal to the substrate surface is referred to as top layer.

It should be noted that the terms top and bottom layer used above and below in conjunction with the description of the method of manufacturing the multilayer films do not have an unambiguous meaning in relation to the multilayer films as such. The term bottom layer is unambiguously defined in relation to the method of the present disclosure as the layer adjacent to the substrate of the coating apparatus. Likewise, the outer layer of the precursor of the multilayer film which is opposite to the bottom layer and which is applied last during the method is unambiguously referred to above and below as top layer. Contrary to this, when referring to the cured multilayer film as such, its two opposite outmost layers are termed above and below for clarity reasons as outer layers.

The terms superimposed and adjacent likewise apply to the cured polymer layers and the cured multilayer film, respectively.

The term precursor as used above and below denotes the material from which the polymers of the corresponding polymer layers of the multilayer film can be obtained by curing. The term precursor is also used to denote the stack of layers comprising at least two layers of liquid precursors from which the multilayer film of the present disclosure can be obtained by curing. Curing can be effected by curing with actinic radiation such as UV, y (gamma) or e-beam radiation or by thermal curing.

The process of the present disclosure employs a substrate onto which the two or more layers of the liquid precursors are coated, and two or more coating knives which are offset independently from each other from the surface of the substrate receiving the precursor of the multilayer film, to form gaps normal to the surface of the substrate.

The direction into which the substrate is moving is referred to above and below as downstream direction. The relative terms upstream and downstream describe the position along the extension of the substrate. A second coating knife which is arranged in a downstream position relative to a first coating knife is also referred to above and below in an abbreviatory manner as downstream coating knife relative to the first (upstream) coating knife.

The coating knives useful in the present disclosure each have an upstream side (or surface), a downstream side (or surface) and a bottom portion facing the surface of the substrate receiving the precursor of the multilayer film. The gap is measured as the minimum distance between the bottom portion of the coating knife and the exposed surface of the substrate. The gap can be essentially uniform in the transverse direction (i.e. in the direction normal to the downstream direction) or it may vary continuously or discontinuously in the transverse direction, respectively.

The cross-sectional profile of the bottom portion of the coating knife in the longitudinal direction is designed so that the precursor layer is formed and excess precursor is doctored off. Such cross-sectional profile can vary widely, and it can be, for example, essentially planar, curved, concave or convex. The profile can be sharp or square, or it can have a small radius of curvature providing a so-called bull-nose. A hook-type profile may be used to avoid a hang-up of the trailing edge of the precursor layer at the knife edge.

The coating knives can be arranged essentially normal to the surface of the web, or they can be tilted whereby the angle between the web and the downstream surface of the coating knife preferably is between 50° and 130° and more preferably between 80° and 100°.

The bottom portion of the coating knife is preferably selected to extend at least across the desired width of the coating in a transverse direction essentially normal to the downstream direction. The coating knife is preferably arranged opposite to a roll so that the substrate is passing between the transversely extending edge of the coating knife and the roller. Thus the substrate is supported by the roller so that the substrate is not sagging in a direction normal to the downstream direction. In this arrangement the gap between the coating knife and the surface of the substrate can be adjusted precisely. If the coating knife is used in an unsupported arrangement, the substrate is held in place by its own tension but may be sagging to some extent in a direction normal to the downstream direction. Sagging of the substrate can be minimized by arranging the coating knife over a short span of the substrate between adjacent rollers. If a continuous substrate is used, sagging can be further minimized by guiding it over an endless conveyor belt. Another option to avoid/minimize sagging is guiding the substrate over a rigid surface.

The coating knives useful in the present disclosure are solid, and they can be rigid or flexible. They are preferably made from metals, polymeric materials, glass or the like. Flexible coating knives are relatively thin and preferably between 0.1 and 0.75 mm thick in the downstream direction and they are preferably made of flexible steels such as stainless steel or spring steel. Rigid coating knives can be manufactured of metallic or polymeric materials, and they are usually at least 1 mm, preferably at least 3 mm thick. A coating knife can also be provided by a continuously supplied polymer film which is tensioned and appropriately deflected by rollers, bars, rods, beams or the like to provide a transversely extending coating edge facing the substrate. If desirable, the polymer film can simultaneously be used as a release liner or as a solid film incorporated into the precursor of the multilayer film.

In the present disclosure a lower layer of a curable liquid precursor (i.e. any layer different from the top layer) is coated with an adjacent upper layer of a curable liquid precursor, essentially from its onset. Thus, the lower curable liquid precursor layer is directly covered by the adjacent upper layer of a curable liquid precursor layer, essentially without exposing said lower curable liquid precursor layer.

A solid film is preferably applied along the upstream side of the coating knife which also provides the lower layer of a curable liquid precursor. The film is thus attached to the upper surface of the lower layer essentially during the formation of said layer and the lower layer is not exposed. Directly depositing an upper layer of a curable liquid precursor onto the upper surface of said lower layer or solid film, respectively, without exposing such upper surface of the lower layer can be accomplished by appropriately arranging the two coating knives forming the two layers.

The liquid precursors may be applied via two coating stations abutting each other in the downstream direction whereby the back walls of the coating chambers comprise or form, respectively, the coating knives. The lower layer when formed by the corresponding coating knife is thus directly covered with the curable liquid precursor of the upper layer contained in the corresponding coating chamber. Generally the coating knife forming the upper layer needs to be arranged so that the lower layer, upon its formation at the corresponding coating knife, is essentially directly covered with the curable liquid precursor forming the upper layer.

In another embodiment, a solid film such as, in particular, a release liner is applied to the exposed surface of the top layer essentially simultaneously with the formation of such top layer. The solid film can be applied, for example, along the upstream surface of the most downstream coating knife (i.e. the back wall) of the coating apparatus. In this embodiment the solid film is smoothly attached to the exposed surface of the top layer in a snug fit thereby avoiding a compression of the top layer or the multilayer stack, respectively, or the inclusion of air between the solid film and the exposed surface of the top layer.

Although the present inventors do not wish to be bound by such theory, it is speculated that the above deposition of a solid film or of the liquid precursor forming the adjacent upper layer, respectively, onto the lower liquid precursor layer essentially simultaneously with the formation of the lower layer by means of coating knives results in multilayer films characterized by superior properties. The multilayer films of the present disclosure exhibit well-defined layers. Due to the wet in wet production, in which mostly uncured compositions are superimposed, diffusion of in particular smaller monomers like acrylic acid can occur at the interface between adjacent layers. It is further believed that the inventive PSA films develop chemical bonds extending from one layer to the adjacent layer which might possibly be even more pronounced by monomer diffusion across the interface. This might be an explanation for the strong anchorage observed between adjacent layers so that the films of the present disclosure typically exhibit especially at elevated temperatures a higher T-peel strength than corresponding films of the prior art obtained by co-extrusion of the corresponding layers and post-curing.

A further advantage of the inventive PSA film is that for both main surfaces, different adhesion characteristics can be realised. So it is for example possible to provide a PSA film which has on one side strong adhesion capabilities to glass surfaces and on the other side to metal or paint surfaces.

The precursor of the multilayer film may be obtained by using a coating apparatus comprising one or more coating stations. The coating stations may comprise one or more coating chambers and, if desired, a rolling bead upstream to the most upstream coating chamber. The coating chambers each have an opening towards the substrate moving beneath the coating chambers so that the liquid precursors are applied as layers superimposed onto each other. The liquid precursor of the rolling bead is applied, for example, via the upstream surface of the most upstream coating knife.

The coating chambers each have an upstream wall and a downstream wall preferably extending essentially transversely with respect to the downstream direction. The most upstream wall of the coating apparatus is also referred to as front wall and the most downstream wall as back wall of the coating apparatus, respectively. In case two or more coating chambers are present, the downstream wall of an upstream coating chamber preferably is in an essentially abutting arrangement with the upstream wall of the adjacent downstream coating chamber. This means that the distance between the downstream wall of an upstream coating chamber and the upstream wall of the adjacent coating chamber preferably is less than 2.5 mm, more preferably less than 1 mm and especially preferably there is no distance at all between these walls. In particular, the downstream wall of an upstream coating chamber and the upstream wall of the adjacent downstream coating chamber are integrated into one wall which is referred to above and below as an intermediate wall.

The downstream walls each comprise a coating knife facing the substrate. The coating knives are arranged above the exposed surface of the substrate onto which the liquid precursors are attached thereby providing for clearance between the bottom portion of the coating knife facing the substrate and the exposed surface of the substrate or the exposed layer of the liquid precursor or precursors attached previously, respectively. The distance between the bottom portion of the coating knife and the surface of the substrate as measured in a direction normal to the surface of the substrate is referred to above and below as gap. The liquid precursors are supplied from the coating chamber to the upstream side of the respective coating knife. The gap between the coating knife and the surface of the substrate is adjusted to regulate the thickness of the respective coating in conjunction with other parameters including, for example, the speed of the substrate in the downstream direction, the thickness normal to the substrate of the liquid precursor layers or solid films, respectively, already applied, the viscosity of the liquid precursor to be applied through the respective gap, the viscosity of the liquid precursor(s) already applied, the kind, form and profile of the coating knife, the angle with which the coating knife is oriented relative to the normal of the substrate, the position of the knife along the extension of the coating apparatus in the downstream direction and the kind of the substrate.

The coating knife can be a separate element attached to the respective downstream wall or it can form the downstream wall, respectively. It is also possible that one or more downstream walls are provided as solid films such as release films.

The knife profile can be optimized for a specific liquid precursor supplied through a coating chamber by using a rotatable coating knife device equipped with several coating knives having a different knife profile. The person skilled in the art can thus quickly change the coating knives used as back wall, front wall or intermediate walls, respectively, in the different coating chambers and evaluate the optimum sequence of coating knife profiles in a coating apparatus for manufacturing a specific multilayer film.

If the coating apparatus useful in the present disclosure comprises only one coating chamber both the upstream wall and the downstream wall of the coating chambers comprise or form, respectively, coating knives. The liquid precursor can be supplied to the upstream edge of the front wall, for example, by means of a so-called rolling bead, or it can be supplied by any kind of hopper.

If the coating apparatus used comprises two or more coating chambers, the front wall may or may not form a coating knife. If the front wall does not form a coating knife it may be arranged so that there is essentially no gap between the transverse extension of the bottom portion of the front wall facing the substrate and the exposed surface of the substrate so that an upstream leakage of the liquid precursor is reduced and/or minimized. If the front wall is a coating knife, the profile of its bottom portion may be formed so that an upstream leakage of the liquid precursor contained in the first upstream coating chamber is suppressed. This can be achieved, for example, by using an essentially radius type profile of the transversely extending edge of the front wall facing the substrate.

The coating cambers each have a downstream wall, an upstream wall and two or more side walls essentially extending in the downstream direction, whereby the downstream wall of an upstream chamber and the upstream wall of an adjacent downstream chamber may be integrated into one intermediate wall. The cross-section of the coating chambers in the downstream direction can vary broadly and can be, for example, square, rectangular, polygonal or regularly or irregularly curved. The downstream wall, upstream wall and/or the side walls may be present as separate elements but it is also possible, for example, that a coating chamber is formed as one piece or that the upstream walls and the side walls, for example, are formed as one piece separate from the downstream wall coating knife.

It is generally preferred that the downstream wall is a separate element or piece so that the coating knives representing the downstream wall can be easily replaced, for example, by means of a revolvable coating knife device. In case the coating apparatus comprises two or more coating chambers their respective cross-sections are preferably selected that adjacent coating chambers can be arranged in an essentially abutting configuration in the downstream direction. The upstream walls and the downstream walls of the coating chambers preferably are essentially straight in the direction transverse to the downstream direction.

The extension of a coating chamber in the downstream direction, i. e. the distance between the front wall and the back wall of a coating chamber is preferably between 5 mm and 1,000 mm and more preferably between 10 and 500 mm. Although the present inventors do not wish to be bound by such theory, it is speculated that if the distance between the front wall and the back wall is too small the flow of the liquid precursor towards the gap tends to become instable which results in undesirable coating defects such as, for example, streaks or "brush-marks". If the distance between the front wall and the back wall of the coating chamber is too large, the continuous flow of the liquid precursor towards the gap may rupture so that the continuous coating of the moving substrate may cease and/or mixing might occur. The flow pattern in a coating chamber or trough is discussed in more detail in US 5,612,092, col. 4, ln. 51 to col. 5, ln. 56. This passage is incorporated by reference into the present specification.

The volume of the coating chambers is defined by their respective shape of the cross-section transverse to the machine direction and the transverse length of the coating chamber. The height of the coating chambers normal to the surface of the substrate preferably is between 10 and 1,000 mm and more preferably between 25 and 250 mm. The volume of the coating chambers is preferably selected as a function of the coating width transverse to the downstream direction and the thickness of the precursor to be coated.

The coating chambers may be fitted with heating or cooling means so that the viscosity of the liquid precursors can be controlled and adjusted if necessary.

The liquid precursors are preferably applied under ambient pressure so that the volume flow of the precursors mainly results from the shear forces acting on the precursors as a result of the movement of the substrates. The volume flow of the liquid precursors is supported by the hydrostatic pressure of the precursor comprised in the respective coating chamber.

It is preferred that the force resulting from the hydrostatic pressure is low in comparison to the drag force or forces exerted by the moving substrate. The height of the liquid precursor in a coating chamber is preferably controlled so that such height corresponds to at least the width of the coating chamber in the downstream direction throughout all of the coating process. If the height of the liquid precursor in a coating chamber is less than the width of the coating chamber in downstream direction partial mixing of the precursor applied through such coating chamber with an adjacent lower precursor layer may occur. The height of the liquid precursor in the respective coating chamber is preferably kept essentially constant.

It is also possible that the coating chambers are pressurized with air or an inert gas such as nitrogen or argon. The coating apparatus may be equipped so that the coating chambers may be pressurized separately and individually which may be desirable, for example, to counterbalance differences in viscosity between the different liquid precursors or differences in height of the liquid precursor column in the coating chambers. Preferably, the coating chambers are not completely filled with the respective liquid precursor so that the liquid precursor is pressurized via a gas atmosphere arranged on top of the liquid precursor. The total over-pressure exerted onto the respective liquid precursor is selected so that the process continues to run in a self-metered fashion, i.e. so that there is no inverse proportionality between the wet coating thickness of a precursor layer and the down-web speed of the substrate. The total over-pressure exerted onto the respective liquid precursor preferably is less than 0.5 bar and more preferably not more than 0.25 bar. In an especially preferred embodiment no gas over-pressure is applied, i.e. the process of the present disclosure is preferably run under ambient conditions.

The substrate is moved relatively to the coating knives in the downstream direction to receive a sequence of two or more layers of the liquid precursors which are superimposed onto each other in a direction normal to the downstream direction.

The substrate can be a temporary support from which the multilayer film is separated and removed subsequent to curing. When used as a temporary support the substrate preferably has a release coated surface adapted to allow for a clean removal of the cured multilayer film from the substrate. It may be desirable that the substrate when providing a temporary support remains attached to the multilayer film when winding it up, for example, for storage. This is especially useful, as the top and bottom layer of the multilayer film have pressure-sensitive adhesive characteristics. The release-coated substrate protects the surface of the pressure-sensitive adhesive layer, for example, from contamination and allows the multilayer film to be wound up into a roll. The temporary substrate will then only be removed from the multilayer film by the final user when attaching the multilayer film to a surface, for example.

The PSA films of this invention may be used for adhering automotive body side moldings, weather strips, road signs, commercial signs, constructions, electrical cabinets, shell molds, machine parts, junction boxes, backsheet solutions for photovoltaic modules, just to give a few examples.

According to a further embodiment of the present invention, at least one intermediate layer is present between the layers of the polymeric pressure sensitive adhesive foam material, whereas the intermediate layer is a polymeric pressure sensitive adhesive foam material as well.

In other words, each of the layers of the PSA film is connected directly to the adjacent layers in such an embodiment, which is therefore preferred. It is especially preferred in that context that the film is free from an interior continuous carrier foil, especially in the form of a polymeric or metal foil. As set out above, one of the advantages of the inventive PSA film is the possibility to provide chemical bonds through the interface from one layer to the adjacent layer. The provision of already prepared polymeric films like polyester films between these layers would disable this effect and should therefore be avoided if a strong coherence between adjacent layers is desired.

Depending on the field of application, it may however be desired to provide one or more internal perforated solid films such as perforated polymeric films or webs, perforated metal films or webs, woven or non-woven webs, glass fibre reinforced webs, carbon fibre webs, polymer fibre webs or webs comprising endless filaments of glass, polymer, metal, carbon fibres and/or natural fibres or the like. In other words, one or more permeable reinforcement layers can be introduced into the inventive film, which can be penetrated by the liquid precursors in order to realize the inventive effect of chemical bonding throughout the interfaces of adjacent layers and also through the reinforcement layers.

The incorporation of such a reinforcement layer can be realized for example by providing such a material in one or more coating chambers of the coating apparatus. They can be introduced along the upstream surface of the front wall, any intermediate wall and the back wall, respectively. As a concrete example, a rolling bead may be arranged upstream to the most upstream coating chamber and a reinforcement layer in form of a PP-web is guided via the upstream surface of the most upstream intermediate wall thereby positioning the reinforcement layer in a snug fit on the second liquid precursor layer provided by the first upstream coating chamber. In such a case, the next precursor layer is applied by the next downstream chamber followed by the most downstream chamber where a release liner may be inserted along the upstream surface of the back wall.

This arrangement provides a precursor of a multilayer comprising four precursor layers, a reinforcement layer inserted between the 2nd and 3rd precursor layer from the bottom and a release liner attached to the exposed surface of the top layer. This is exemplary only, and the person skilled in the art will select the reinforcement layer or layers suitable for providing a specific multilayer film with a desired profile of properties and will vary the arrangement and the number of such films within the multilayer film. If less than four liquid layers are required the corresponding number of downstream coating knives and/or the rolling bead are omitted. The top release liner if desired is attached to the exposed surface of the top layer in a snug fit, i.e. for example via the upstream surface of the most downstream coating knife of the modified assembly.

An especially preferred embodiment of the present invention is that at least two of the layers of the PSA film have a different composition. In particular the layers of different composition are adjacent layers. As set out above, such an embodiment may be preferably used to provide adhesive films with different properties on both major surfaces. It may be however also used to provide an interior layer with different mechanical properties compared to the outer adhesive layers.

Furthermore, several interior layers with different characteristics may be provided according to this embodiment. For example, a first intermediate layer may be provided to improve the resistance to a pull force and a second, soft intermediate layer may be used to improve the levelling capabilities of the PSA film on rough surfaces. Other applications include the possibility to provide one surface with a good adhesion on low-energy surfaces, whereas the other surface has good adhesion to high-energy surfaces.

The polymeric pressure sensitive adhesive foam material and the polymeric foam material used for the inventive PSA film may be based on a plurality of polymer base materials. For example, the polymer base material for the polymeric pressure sensitive adhesive foam material and/ or the polymeric foam material may independently be selected from the group comprising acrylic resins, rubbers, block-copolymers, α-olefin polymers like polyethylene or polypropylene, polyurethanes, polyamines, polyesters, polyethers, polyisobutylene, vinylic compounds, polyamids or combinations thereof.

The curable precursors are chosen to yield the respective polymeric pressure sensitive adhesive foam material and the polymeric foam material, respectively. For the inventive films, acrylate-based precursors are in particular preferred for the polymeric pressure sensitive adhesive foam material. These precursors may comprise alkyl (meth)acrylate monomers with alkyl groups containing 4 to 20 carbon atoms. Useful alkyl (meth) acrylates include linear and branched monofunctional unsaturated acrylates of alkyl alcohols, the alkyl groups of which have from 4 to 20, preferably from 4 to 14 and, in particular, from 4 to 10 (carbon atoms. Useful examples include n-butyl acrylate, isobutyl acrylate, hexyl acrylate, 2-ethylhexyl acrylate, isooctyl acrylate, n-octyl acrylate, 2-methylbutyl acrylate, isononyl acrylate, n-nonyl acrylate, n-decyl acrylate, isodecyl acrylate, isobornyl acrylate, 4-methyl-2-pentyl acrylate and dodecyl acrylate and their methacrylate analogues. Preferred alkyl acrylate esters include isooctyl acrylate, n-butyl acrylate, 2-ethylhexyl acrylate, isononyl acrylate, dodecyl acrylate, 2-propylheptyl acrylate and mixtures thereof. Particularly suitable alkyl acrylates include isooctylacrylate, 2-ethyl hexyl acrylate and combinations thereof.

Another preferred liquid precursor suitable for the polymeric pressure sensitive adhesive foam material and the polymeric foam material comprises at least one ethylenically unsaturated compound comprising at least one urethane bond. Such compounds preferably are monomers or oligomers, and/or at least one of the ethylenically unsaturated groups preferably is a (meth)acrylate group. Such precursor can be polymerized to a polyurethane acrylate polymer, i. e. to a polymer comprising urethane bonds. Especially preferred is a liquid precursor comprising one or more mono- and/or multi(meth)acrylate functional monomer or oligomer compounds comprising at least one urethane bond, one or more monomer compounds comprising one or more ethylenically unsaturated groups but no urethane bond and one or more photoinitiators.

Mono- and multi- (meth)acrylate functional oligomers comprising at least one urethane bond are commercially available, for example, from Rahn AG, Zurich, Switzerland under the GENOMER trade designation. GENOMER 4188 is a mixture consisting of 80 wt. % of a monoacrylate-functional polyester based oligomer comprising at least one urethane bond, and 20 wt. % of 2-ethylhexyl-acrylate; the oligomer comprised by GENOMER 4188 has a weight average molecular weight Mw of about 8,000 and the average acrylate functionality is 1 + 0.1. GENOMER 4316 is an aliphatic trifunctional polyurethane acrylate characterized by a viscosity of 58,000 mPas at 25 °C and a glass transition temperature Tg 4 °C. GENOMER 4312 is an aliphatic trifunctional polyester urethane acrylate characterized by a viscosity of 50,000 - 70,000 mPas at 25 °C.

The mono- or multi-(meth)acrylate functional oligomer compounds each have at least one, preferably at least 2 and more preferably at least 4 urethane bonds.

Mono- and multi-(meth)acrylate functional oligomers and their preparation are disclosed on p. 4, ln. 24 - p. 12, ln. 15 of WO2004/000,961 which passage is herewith incorporated by reference.

The amount of the one more mono- or multi-(meth)acrylate functional oligomers comprising at least one urethane bond with respect to the total mass of (meth)acrylate functionalized monomers, oligomers and/or polymers with the exception of crosslinkers preferably is from 30 - 97.5 wt.-% and more preferably from 45 - 95 wt.-%.

The liquid precursor of the polyurethane polymer preferably comprises one or more (meth)acrylate monofunctional compounds having a glass transition temperature of the corresponding homopolymer of less than 10 °C. Preferred examples of such monomers include n-butyl acrylate, isobutyl acrylate, hexyl acrylate, 2-ethylhexyl acrylate, isooctyl acrylate, caprolactone acrylate, isodecyl acrylate, tridecyl acrylate, lauryl methacrylate, methoxy-polyethylenglycol-monomethacrylate, lauryl acrylate, tetrahydrofurfuryl acrylate, ethoxy-ethoxyethyl acrylate and ethoxylated-nonyl acrylate. Especially preferred are 2-ethylhexyl acrylate, isooctyl acrylate and tetrahydrofurfuryl acrylate.

According to a further embodiment, the precursor of the polymeric pressure sensitive adhesive foam material may comprise at least one ethylenically unsaturated monomer comprising a nitrogen or oxygen atom and/ or one or more polar comonomers. In such monomer mixtures, the amount of the alkyl acrylate monomer with respect to the total weight of the monomers typically is at least 55 wt.-%, preferably at least 70 wt.-%. Useful amounts of alkyl (meth)acrylate monomers are between 55 and 97.4 wt.-%, preferably between 70 and 95 wt.-%, more preferably between 75 and 92 wt.-%, based on total weight of the monomer mixture.

Suitable examples for the ethylenically unsaturated monomers comprising a nitrogen or oxygen atom are N-vinyl lactams, including for example N-vinyl caprolactam, N-vinyl pyrrolidone, N-vinyl phtalimid, N-vinyl imidazol, vinyl pyridine. Further examples include (meth)acrylates, such as for example pyrrolidone acrylates, including for example pyrrolidone ethyl acrylate, tetrahydrofurfuryl acrylate and acryloyl morpholine. Again other examples include oxetane (meth)acrylates, such as 3-ethyl-3-oxetanyl (meth)acrylate, commercially available from San Ester Corporation, Japan. Also useful are dioxolane functional acrylates or methacrylates, such as cychohexyl dioxolane (meth)acrylate, methyl isobutyl dioxolane (meth) acrylate, dimethyl dioxolane (meth) acrylate and methyl ethyl dioxolane (meth)acrylate, all commercially available from San Ester Corporation, Japan.

Other suitable representatives comprise glycoside (meth)acrylates, solketal (meth)acrylate (SMA, SA), TMPO-MA, GCA, imidazolylethyl (meth)acrylates, piperid-inylethyl (meth)acrylate, morpholinoethyl (meth) acrylates, TAAo I-MA, pyrollidonylethyl (meth)acrylate, Heonon (meth)acrylate. Particular suitable monomers comprise N-vinyl caprolactam and tetrahydrofurfuryl acrylate (comment NVC and tetrahydrofurfuryl acrylate are already mentioned in previous paragraph).

The ethylenically unsaturated monomer comprising a nitrogen or oxygen atom can suitably be used in amounts between 2.5 and 40 wt.-%, preferably between 5 and 30 wt.-%, particular between 15 and 25 wt.-% based on the total weight of the monomer mixture.

As set out above, the monomer mixture may further comprise one or more polar comonomers. Representatives of these polar comonomers include but are not limited to acrylic acid, methacrylic acid, itaconic acid, hydroxyalkyl acrylates, acrylamides and substituted acrylamides. Further examples for polar comonomers include cyano acrylate, fumaric acid, crotonic acid, citric acid, maleic acid, ß-carboxyethyl acrylate or sulfoethyl methacrylate. Particularly suitable polar comonomers are selected from the group of acrylic acid, methacrylic acid and itaconic acid. Of these, acrylic acid is of particular interest.

The amount of polar comonomers does in particular not exceed 5 wt.-% based for LSE (low Surface Energy)surfaces on the total weight of the monomer mixture. Useful amounts of polar monomers for adhesion to LSE surfaces are between 0.1 to 5 wt.-%, preferably between 1 and 4 wt.-%, particular between 1.5 and 3 wt.-% based on total weight of the monomer mixture.

A preferred curable precursor for a polymeric pressure sensitive adhesive foam material suitable for bonding to LSE (low surface energy) surfaces contains a monomer mixture comprising 55 to 97.4 wt.-% of one or more alkyl (meth)acrylate monomers, the alkyl groups of which comprise from 4 to 14 (20) carbon atoms, 2.5 to 40 wt.-% of one or more ethylenically unsaturated monomers comprising a nitrogen- or oxygen atom and 0.1 to 5 wt.-% of one or more polar comonomers.

In the context of the present invention, it is specifically preferred that the polymeric pressure sensitive adhesive foam material and/or the polymeric foam material contains cavities in the form of hollow microspheres such as glass bubbles, expandable or expanded microspheres, in particular hydrocarbon filled expandable microspheres or gaseous cavities, hollow inorganic particles, expanded inorganic particles, polymer bubbles or beads (which may be expanded or unexpanded) or any combination thereof.

The gaseous cavities can be produced by stirring in gas bubbles into the uncured precursor of the polymeric pressure sensitive adhesive foam material and/or the polymeric foam material (so-called "frothing").

The hollow microspheres or microbubbles used for the inventive film may be selected from a variety of materials. These materials may include glass, silica, ceramic or zirconia. Useful microspheres can have a size ranging from 5 to 200 µm in diameter, and preferably from 10 to 120 µm.

Suitable commercially available hollow microspheres include unexpanded organic hollow microspheres, available, for example, from Akzo Nobel under the trade designation "EXPANCEL". Unexpanded organic hollow microspheres are sometimes also referred to as expandable organic microballoons which are also available, for example, from Lehmann and Voss, Hamburg, Germany under the trade designation MICROPEARL. The microspheres comprise an expandable polymer shell enclosing a gaseous atmosphere comprising, for example, pentane. They expand upon heating and can be incorporated into the adhesive composition in the expanded form. They can also be added in unexpanded form to the adhesive composition as they will expand under influence of the heat produced during curing and thus provide a foam-like adhesive. Pre-expanded organic hollow microspheres are commercially available, for example, from Lehmann & Voss, Hamburg, Germany under the trade designation DUALITE.

Hollow glass microspheres and hollow ceramic microspheres can also be used, whereas suitable hollow glass microspheres are commercially available for example from 3M Company under the trade designation Glass bubbles D32, Glass bubbles K15 or Scotchlite D32/4500.

Useful amounts of hollow microspheres range from 1 to 20 wt.-% with reference to the total mass of the respective monomer mixture, preferably from 4 to 16 wt.-%, especially preferred from 5 to 10 wt.-%.

The polymeric pressure sensitive adhesive foam material and/ or the polymeric foam material may contain an additive, which is preferably selected from the group comprising softeners, hardeners, filler materials, tackifiers, colorants, pigments, conservatives, solvents, rheology modifiers, UV-stabilizers, initiators, crosslinking agents, thixotropic agents, surface additives, flow additives, nanoparticles, degassing additives, antioxidants, fire retardants, reinforcing agents, toughening agents, hydrophobic or hydrophilic silica, calcium carbonate, glass or synthetic fibers, or any combination thereof.

Although the type of tackifiers is not limited in this context, preferred tackifiers do not interfere with the curing reaction of the curable precursor of the polymeric pressure sensitive adhesive foam material and/ or the polymeric foam material. Examples of such tackifiers are partially or fully hydrogenated resins, in particular partially and fully hydrogenated hydrocarbon resin tackifiers. Examples of useful hydrogenated hydrocarbon tackifiers include, C9 and C5 hydrocarbons such as those sold under the trade designation "REGALITE S-5100", "REGALITE R-7100", "REGALITE R-9100", "REGALITE R-1125", "REGALITE S-7125", "REGALITE S-1100", "REGALITE R-1090", "REGALREZ 6108", "REGALREZ 1085", "REGALREZ 1094", "REGALREZ 1126", "REGALREZ 1126", "REGALREZ 1139", "REGALREZ 3103", REGALREZ 6108, sold by Eastman Chemical Co., Middelburg, Netherlands, "PICCOTAC" and EASTOTAC" sold by Eastman Chemical Co., "ARKON P-140", "ARKON P-125", "ARKON P-115", "ARKON P-100", "ARKON P-90", "ARKON M-135", "ARKON M-115", "ARKON M-100", and "ARKON M-90" sold by Arakawa Chemical Inc., Chicago, IL, and "ESCOREZ 500" sold by Exxon Mobil Corp., Irving, TX.

The amount of tackifiers present in the curable precursor does preferably not exceed 60 wt.-% of monomer mixture. Useful amounts of tackifiers include levels between 1 and 60 wt.-% with reference to the total mass of the respective monomer mixture, preferably between 5 and 25 wt.-% and in particular between 7.5 and 15 wt.-%.

If a crosslinking agent is present, its amount is chosen to be effective to optimize the cohesive or inner strength of the cured polymeric pressure sensitive adhesive foam material and/ or the polymeric foam material.

The crosslinking agent typically comprises a multifunctional acrylate or methacrylate monomer, comprising 2, 3 or 4 acrylic functions. Suitable examples of crosslinking agents include C2 - C12 hydrocarbon diacrylates such as for example 1,6-hexanediol diacrylate, 1,12-dodecanol diacrylate, 1,2-ethylene glycol diacrylate, tripropylene glycol diacrylate, C3 - C12 hydrocarbon triacrylates such as trimethylolpropane triacrylate. Further examples include hydrocarbon tetra acrylates, for example pentaerythritol tetraacrylate. Particularly suitable are two-or three acrylate-functional monomers, of which 1,6-hexane diol diacrylate is especially preferred. Also suitable are compounds with two or more ethylenically unsaturated groups like C4 - C14 hydrocarbon divinylethers such as hexanediol divinylether.

The crosslinking agents are preferably present in an amount of up to 2 wt.-%. Useful amounts of crosslinking agent are between 0.01 to 2 wt.-% with reference to the total mass of the respective monomer mixture, in particular between 0.05 and 1.5 wt.-% and very specifically between 0.08 and 0.15 wt.-%.

For the current invention, a wide variety of polymerization initiators can be used. A suitable initiator is represented for example by the class of benzoin ethers (e.g., benzoin methyl ether, benzoin isopropyl ether, substituted benzoin ethers such as anisoin methyl ether), acetophenones (e.g., 2,2-diethoxyacetophenone), substituted acetophenones such as 2,2-diethoxyacetophenone, 2,2-dimethoxy-2-phenyl- acetophenone, and 1-phenyl-2-hydroxy-2-methyl-1-propanone, substituted alpha-ketols (e.g., 2-methyl-2-hydroxy- propiophenone), aromatic sulphonyl chloride, and photoactive oximes such as 1-phenyl-1,1-propanedione-2-(O-ethoxycarbonyl) oxime. Particularly suitable initiators include 2,2-dimethoxy-2-phenylacetophenone.

In addition to using UV radiation, additional curing techniques such as thermal, moisture ore high energy electromagnetic radiation, such as gamma or e-beam radiation can be used.

The initiator compounds are preferably present in an amount of 0.01 - 2 wt.-% with reference to the total mass of the respective monomer mixture, in particular, between 0.05 - 1 wt.-% and very specifically between 0.1 - 0.5 wt.-%.

Thixotropic agents may be added to control the flow characteristics of the curable precursor and typically include particulate materials having particle sizes of less than 50 nm. Preferred thixotropic agents include fumed silica. Thixotropic agents are commercially available under the trade designation Cab-O-Sil from Cabot, Schwal-bach im Taunus, Germany, or Aerosil from Degussa Evonik GmbH, Frankfurt, Germany.

When used, the thixotropic agent will typically be added in amounts up to 15 wt.-%, preferably up to 10 wt.-% of the uncured mixture.

A curable precursor for a polymeric pressure sensitive adhesive foam material may contain a monomer mixture comprising 55 to 97.4 wt.-% of one or more alkyl (meth)acrylate monomers, the alkyl groups of which comprise from 4 to 20 carbon atoms, 2.5 to 40 wt.-% of one or more ethylenically unsaturated monomers comprising a nitrogen- or oxygen atom and 0.1 to 5 wt.-% of one or more polar comonomers.

Besides the before mentioned monomer mixture, the curable precursor for a polymeric pressure sensitive adhesive foam material may comprise 0.01 to 2 wt.-% crosslinking agent, 1 to 60 wt.-% of one or more partially or fully hydrogenated resin tackifier and 1 to 20 wt.-% hollow or expandable microspheres. Such a curable precursor is substantially free of any solvent and is radiation curable by subjecting it to actinic radiation until the precursor is cured.

The thickness of the liquid precursor layers of the polymeric pressure sensitive adhesive foam material and/ or the polymeric foam material may vary in wide ranges. For example, the thickness can be chosen independently for each layer between 25 µm and 3,000 µm, more preferably between 75 µm and 2,000 µm and especially preferably between 75 µm and 1,500 µm. The individual layers of the PSA film of the present invention may vary in the same ranges, but may however be lower due to volume shrinkage caused by the curing reaction.

The gap width required to provide a desired value of the thickness of the precursor layer depends on various factors such as the profile of the coating knife, the angle of the coating knife normal to the substrate, the downstream speed of the substrate, the number of layers of liquid precursors to be coated, the rheological behaviour that could for example be indicated by the absolute values of the viscosities of the liquid precursors and the ratio of the absolute values of the viscosity of a specific precursor with respect to the absolute viscosity values of the liquid precursor present in adjacent layers. Generally, the gap width needs to be larger than the desired thickness of the respective layer of the liquid precursor regulated by such gap. It is disclosed, for example, in Kirk-Othmer, Encyclopedia of Chemical Technology, 4th ed., ed. by J. Kroschwitz et al., New York, 1993, vol. 6, p. 610, as a rule of thumb that the thickness of the liquid precursor layer obtained by means of a coating knife arranged normal to the substrate and having a transversely extending bottom portion with a square profile arranged in parallel to the substrate is about half the width of the gap for a wide range of substrate speeds.

The gap width is measured in each case as the minimum distance between the bottom portion of the coating knife facing the substrate and the exposed surface of the substrate. The gap is preferably adjusted to a value between 50 µm and 3,000 µm and more preferably between 100 µm and 2,500 µm.

The Brookfield viscosity of the liquid precursors at 25 °C is preferably between 100 and 50,000 mPas, more preferably between 500 and 30,000 mPas and particularly preferred between 1500 and 25,000 mPas. If the liquid precursor comprises solid particles such as, for example, pigments or thermally and/or electrically conducting particles, the viscosity of the liquid precursor preferably is between 1,000 and 30,000 mPas and more preferably between 3,000 and 25,000 mPas.

It was found by the present inventors that liquid precursors having a lower Brookfield viscosity can be coated faster and thinner. If a layer thickness of the liquid precursor of less than 500 µm is required, the Brookfield viscosity of the liquid precursor preferably is less than 15.000 mPas and more preferably between 500 mPas and 12.500 mPas.

If the viscosity of the liquid precursor is less than about 100 mPas, the coated layer tends to get unstable and the thickness of the precursor layer may be difficult to control. If the viscosity of the liquid precursor is higher than about 50.000 mPas, coating of homogeneous films tends to get difficult due to high shear forces induced by the high viscosity. If the liquid precursor comprises curable monomers and/or oligomers the viscosity of the precursor may be increased in a controlled way within the ranges given above by partially polymerizing the precursor to provide a desirable coatability. Alternatively, the viscosity of the liquid precursor or monomer mixture may be increased and adjusted by adding thixotropic agents such as fumed silica and/or polymer adds such as block-copolymers (SBRs, EVAs, polyvinylether, polyalphaolefins), silicones or acrylics. The viscosity of the liquid precursor may also be decreased, for example, by increasing the amount of curable monomers and/or oligomers.

It was found that the ratio of the Brookfield viscosities of the liquid precursors of an upper liquid precursor layer and a lower, adjacent liquid precursor layer within a stack of precursor layers preferably is between 0.1 and 10 and more preferably between 0.2 and 7.5. It was found that if such ratio is outside of these preferred ranges the thicknesses of such liquid precursor layers may become inhomogenous in the downstream direction.

The downstream speed of the substrate preferably is between 0.05 and 100 m/min, more preferably between 0.5 and 50 m/min and especially preferably between 1.5 and 50 m/min. If the downstream speed of the substrate is less than 0.05 m/min the flow of the liquid precursors towards the gap becomes slow and instable resulting in coating defects. If the downstream speed of the substrate is higher than 100 m/min turbulences might occur at the interfaces between the precursor layers which may, depending on the viscosity and rheology of the precursors, result in uncontrolled mixing and/or coating defects.

It was found by the present inventors that for a specific viscosity of a liquid precursor the quality of the coating may unacceptably deteriorate if the downstream speed of the substrate is selected too high. The deterioration in quality may be reflected in the entrainment of air bubbles or in the occurrence of a streaky and non-uniform coating. The coating speed is preferably adapted so that all liquid precursor layers in a stack of such layers are coated uniformly and with a high quality, i.e. the most speed-sensitive layer determines the overall downstream speed. If the downstream speed of the substrate is selected too low, a reduction of the layer thickness may not be achievable by the reduction of the corresponding gap width only but may also require an increase of the downstream speed. It was furthermore found by the present inventors that the downstream speed of the substrate is preferably selected between the maximum and minimum values specified above. In such downstream speed interval the thickness of the liquid precursor layers is relatively insensitive to variations of the downstream speed so that the thickness of the liquid precursor layer can be majorly regulated by the gap width.

The liquid precursors suitable in the present disclosure comprise a broad range of precursors which can be cured by exposure to actinic radiation and, in particular, to UV-radiation, gamma-radiation and E-beam or by exposure to heat. The liquid precursors are preferably light-transmissive to visible light.

To protect the adhesive layers of the PSA film, a protective liner may be provided on one or both main surfaces. The protective liner can be realised by siliconized paper or a siliconized polymeric film. Besides siliconization, other measures to provide low adhesion surfaces may be applied which are known to the skilled person.

Another object of this invention is directed to a continuous self-metered process for manufacturing a multilayer pressure sensitive adhesive (PSA) film according to this invention, the process comprising the steps of
(a) providing a substrate,
(b) providing two or more coating knives which are offset, independently from each other, from said substrate to form a gap normal to the surface of the substrate,
(c) moving the substrate relative to the coating knives in a downstream direction,
(d) providing curable liquid precursors of the polymeric pressure sensitive adhesive foam materials and optionally of the polymeric foam material to the upstream side of the coating knives thereby coating the two or more precursors through the respective gaps as superimposed layers onto the substrate,
(e) optionally providing one or more protective liners and applying these along the upstream side of the coating knives, and
(f) curing the precursor of the multilayer film thus obtained,
wherein a lower layer of the curable liquid precursor is covered by an adjacent upper layer of the curable liquid precursor, essentially without exposing said lower layer of a curable liquid precursor.

The present invention is explained in more detail with the help of the following examples.

### Examples

Before presenting the test results, a short overview of the test methods established for determining adhesion (90° peel) and shear properties of the pressure sensitive adhesives will be given in order to provide a basic understanding of the values obtained. Further the list of materials, the making of the liquid precursors and the coating process itself, to provide for examples 1 through 3, will be described.

### Low surface energy test panel substrates used for adhesion and shear testing

### 1.) Automotive Clear coat coated panels:

UreGloss clearcoat coated panels available from BASF Coatings

CeramiClaer5 coated panels available from PPG Industries

VW 2K clearcoat coated panels available from BASF coatings

The upper listed clear coats include acrylic resins and polyesters used alone or with mixtures of copolymers comprising hydroxy- or glycidyl-functionalities or car-bamatic acid residues (groups); or copolymers of acrylic acid and methacrylic acid esters with hydroxyl groups, free acid groups and further comonomers (e.g. styrene).Panels were cut prior to 90 °peel and shear testing to the requested dimension.

### 2.) Polyolefine panels:

Polypropylene (PP) plates having a dimension of 150mm x 50 mm X 2mm, available as "Kunststoffprüfkörper PP nature; Fabrikat Simona HWST"

STA - 211 Polyethylene (PE) foil having a thickness 150 µm and a rough and a smooth side was fixed on an aluminium plate having a dimension of 150 mm x 50 mm x 2 mm

Polyethylene (PE) plates having a dimension of 150mm x 50 mm X 2mm, available as "Kunststoffprüfkörper PE nature; Fabrikat Simona HWST"

Polypropylene (PP) foil having the same thickness as the previous mentioned STA-211 PE foil was fixed on an aluminium plate having the following dimensions: 150 mm x 50 mm x 2 mm

Same as for the automotive clear coat coated panels, the polyolefine panels were cut prior to testing to the requested dimension.

Before testing, the Automotive clear coat coated panels were cleaned either with a 1:1 mixture of isopropylalcohol and distilled water in the case of Uregloss and VW 2K clear coats or with n-heptane for the CeramiClear 5 clear coat. Test panels were then rubbed dry with a paper tissue.

The Polypropylene (PP) and /or Polyethylene(PE)panels were cleaned with a 1:1 mixture of isopropylalcohol and distilled water. Test panels were then rubbed dry with a paper tissue.

### Test methods

### 90°-Peel-test @ 300 mm/min (according to Test Method, Finat No. 2):

Foam strips of 12.7 mm width and >175 mm length were first cut out in the machine direction. The liner was then removed from each foam strip and the desired adhesive side to be tested was placed, with its desired adhesive side down, on a cleaned test panel using light finger pressure. Test samples were then rolled twice in each direction using a standard FINAT test roller (6.8 kg) at a speed of approximately 10 mm per second in order to obtain intimate contact between the adhesive mass and the surface. Test samples were allowed different dwell times of 20 minutes, 24 hours or 72 hours at ambient room temperature /23 °C +/- 2 °C, 50% r.h +/-5 %) prior to testing.

For peel testing the test samples were in a first step clamped in the lower movable jaw of a Zwick tensile tester (Model Z020 commercially available from Zwick/Roell GmbH, Ulm, Germany). The foam strips were folded back at an angle of 90° and their free ends grasped in the upper jaw of the tensile tester in a configuration commonly utilized for 90° measurements. The tensile tester was set at 300 mm per minute jaw separation rate. Test results were expressed in Newton per 12,7 mm (N/12.7 mm) The quoted peel values are the average of three 90°-peel measurements.

### Static shear test @ 70 °C with 500 g hanging weights (according to Test Method, Finat No.8):

The static shear is a measure of the cohesiveness or internal strength of an adhesive. It is measured in units of time (minutes) required to pull a standard area of adhesive sheet material from a stainless steel test panel under stress of a constant, standard load.

Foam strips of 10 mm width and 25 mm length were first cut out in machine direction. The surface liners were then removed and the foam strips placed with the desired adhesive foam side onto aluminum backings. After removal of the second liner the foam strips were attached to the test panels, providing a bond area of 25 x 10 mm and using light finger pressure. The standard FINAT test roller (6.8 kg) was rolled twice in each direction at a speed of approximately 10 mm per second, in order to obtain intimate contact between the adhesive mass and the substrate surface (test panel). After applying the foam strips to the test panels, all test samples were allowed a dwell time at room temperature (23 °C +/-2 °C and 50 % +/- 5 % r.h) for a period of 24 hours before testing. A loop was next prepared at the end of each foam strip in order to hold the specified weight and the test samples were then placed in a shear holding device. After a 10 minute dwell time at the test temperature of 70 °C, 500 g loads were attached in the loops to each of the test samples. The timer was started and the results were recorded in minutes until failure. Test results listed in later tables are the average of three shear measurements. A recorded time of "10000+" indicates that the tape did not fail after 10000 min.

### List of materials:

2-Ethylhexylacrylate 2-EHA available from BASF AG, Germany

Acrylic acid AA available from BASF AG, Germany

1,6-Hexanedioldiacrylate (HDDA) available from Sartomer Co. (Cray Valley France)

N-Vinylcaprolactam (NVC) available from BASF AG, Germany

Tetrahydrofuran (THF)-acrylate 2839 from AgiSyn, Japan

Regalrez 6108, hydrogenated hydrocarbon Resin , available from Eastman Chemical Company, Co. Middelburg Netherlands

Omnirad BDK, 2,2-Dimethoxy-2-phenylacetophenone (UV-initiator) available from iGm resins, Waalwijk Netherlands

Glass bubbles K15, low density glassbubbles (0.15g/cc), commercially available from 3M, USA

Aerosil 972, fumed silica, commercially available from Evonik Industries

GTE6208: Acrylic Foam Tape with a laminated AR-7 acrylic pressure-sensitive adhesive suitable especially for automotive clear coats, thickness: 0.8 mm, commercially available from 3M, Germany

GTE6212: Acrylic Foam Tape with a laminated AR-7 acrylic pressure-sensitive adhesive suitable especially for automotive clear coats, thickness: 1.2 mm, commercially available from 3M, Germany

GTE 6112: Acrylic Foam Tape with a laminated acrylic pressure-sensitive adhesive suitable especially for polyolefin surfaces, thickness: 1.2 mm, commercially available from 3M, Germany

5670: Acrylic Foam Tape with a laminated acrylic pressure-sensitive adhesive suitable especially for polyolefin surfaces, thickness: 0.8 mm, commercially available from 3M, Germany.

Preparation of the liquid precursors:

### Liquid Precursor 1 (LP 1) :

Liquid Precursor 1 was prepared by adding 76,5 wt.% 2-EHA and 1,5 wt.% of acrylic acid in a vessel containing 0,04 pph of Omnirad BDK. The mixture was partially polymerized under a nitrogen-rich atmosphere by UV radiation under continuous stirring with a propeller stirrer (300 U/min) and the reaction was stopped when the stirring moment reached a value of 70 units (Brookfield viscosity of 4200 mPas at 25 °C). Subsequent to the curing 22 wt.% of NVC, 0,09 pph of 1,6-hexanediol diacrylate as a crosslinker, 0,13 pph of Omnirad BDK as a photoinitiator, 6 pph of glass bubbles K15 and 9 pph of Aerosil 972 were added and the resulting mixture was thoroughly stirred for additional 30 minutes, in order to provide liquid precursor 1.

### Liquid Precursor 2 (LP 2) :

Liquid Precursor 2 was prepared by adding 76,5 wt.% 2-EHA and 1,5 wt.% of acrylic acid in a vessel containing 0,04 pph of Omnirad BDK. The mixture was partially polymerized under a nitrogen-rich atmosphere by UV radiation under continuous stirring with a propeller stirrer (300 U/min) and the reaction was stopped when the stirring moment reached a value of 70 units (Brookfield viscosity of 4200 mPa.s at 25 °C). Subsequent to the curing 22 wt.% of THF-acrylate, 0,09 pph of 1,6-hexanediol diacrylate as a crosslinker, 0.13 pph of Omnirad BDK as a photoinitiator, 6 pph of glass bubbles K15 and 9 pph of Aerosil 972 were added and the resulting mixture was thoroughly stirred for 30 minutes to provide liquid precursor 2.

### Liquid Precursor 3 (LP 3) :

A comparative formulation with the main components being 2-EHA and acetic acid with glass bubbles K 15 and Aerosol 972 was prepared. 90 wt.% of 2-EHA and 10 wt.% of acrylic acid were combined with 0.04 wt.% of Irgacure 651 as a photoinitiator in a glass vessel and stirred for 30 minutes. The mixture was partially polymerized under a nitrogen-rich atmosphere by UV radiation to a degree of polymerization of approximately 5-10 % and a Brookfield viscosity of 9800 mPa·s at 25 °C. Subsequent to the curing 3 pph of Aerosil 972, 6 pph of glass bubbles , 0.1 wt %. of 1,6-hexanedioldiacrylate as a crosslinker and 0.16 wt% of Irgacure 651 as a photoinitiator were added and the resulting mixture was thoroughly stirred for 30 minutes to provide liquid precursor 3.

### Coating of liquid precursors and example preperation

For the preparation of the examples, an in-line application of two or more wet layers to a substrate with subsequent curing (in our case two acrylic foam syrups) was performed as described above and in specific in the unpublished international patent application PCT/US2011/022685. Curing was done by a photochemical method using UV light.

The multilayer example foams produced this way were smooth, homogenous and consisted of layers with distinct and regular interfaces to each other. No uncontrolled mixing at any time, was observed.

For example preparation, a release liner Hostaphan 2SLK, 75 µm thick, commercially available from Mitsubishi was used and all examples were produced at a line speed of the lab coater of 0.71 m/min.

The lab coater had a UV curing station of 3 m length, where each zone could be run with a different UV-intensity. Curing was effected both from the top, i. e. in a direction towards the exposed liquid precursor layer optionally covered with a release liner and from the bottom, i. e. in a direction towards the substrate whereby the intensities provided in both directions were set at equal levels. The radiation was provided by fluorescent lamps at a wavelength between 300 - 400 nm with a maximum at 351 nm. The total radiation intensity irradiated cumulatively from top and bottom and the respective length of the two coating zones was as listed in table 1:

**Table 1**

| | Zone 1 (length 200 cm) | Zone 2 (length 100 cm) |
|---|---|---|
| Total intensity [mW/cm²] | 2.07 | 4.27 |

The UV-radiation curing of the multilayer foam examples was done both from the top and the bottom side , hereby the UV intensity was set at equal levels in all zones.

In order to evaluate the ability of the new process for making multilayer acrylic foam tapes a coating unit was used which was mounted upstream of the UV-curing station. The liquid precursors were coated onto the bottom liner. The top liner was guided through the most down-web chamber of the coating unit.

### Construction of examples 1 to 3

Table 2 shows the constructions of examples 1 to 3. Hereby examples 1 and 2 are dual layer foam constructions and example 3 is a triple-layer foam tape construction having an overall thickness of 870 µm.

**Table 2:**

| **Trial** | **Layer** | **Chamber I** | | **Gap (µm)** | **Chamber II** | **Gap (µm)** | **Foam Thickness (µm)** | |
|---|---|---|---|---|---|---|---|---|
| Ex.1 1 | 2 | LP 1 | | 740-750 | LP2 | 950-960 | 813 | |
| Ex.2 | 2 | LP 1 | | 1000-1010 | LP2 | 1350-1360 | 1298 | |

| Trial | Layer | Chamber I | Gap (µm) | Chamber II | Gap (µm) | Chamber III | Gap (µm) | Thickness [µm] |
|---|---|---|---|---|---|---|---|---|
| Ex.3 | 3 | LP 1 | 300-310 | LP 3 | 1000-1100 | LP 2 | 950-960 | 870 |

Chamber I refers to the reservoir from which the first liquid precursor is provided, i.e. upstream from the first coating knife, whereas chamber II refers to the respective reservoir for the second precursor deposited between the first and second coating knife.

### Test results:

90°-Peel values of example 1 (Ex.1) having an pressure-sensitive adhesive side optimized for Automotive clear coats versus a with AR-7 acrylic pressure-sensitive adhesive laminated Acrylic Foam tape commercially available as GTE 6208 from 3M to three different automotive clear coats are listed in the three tables (Tables 3 to 5) below. 90° peel adhesion values were measured after test sample dwell times of 20 minutes, 24 hours and 72 hours at 23 °C +/-2 °C. Per example three test samples were measured and the results averaged and reported in N/12.7 mm.

**Table 3**

| Test panel substrate: UreGloss coated | | |
|---|---|---|
| Dwell time | Example 1 | GTE 6208 |
| 20 min | 18,74 | 17,83 |
| 24 h | 22,50 | 20,75 |
| 72 h | 24,71 | 21,52 |

**Table 4**

| Test panel substrate: CeramiClear5 coated | | |
|---|---|---|
| Dwell time | Example 1 | GTE 6208 |
| 20 min | 22,34 | 25,10 |
| 24 h | 25,61 | 25,13 |
| 72 h | 28,16 | 27,55 |

**Table 5**

| Test panel substrate: VW2K coated | | |
|---|---|---|
| Dwell time | Example 1 | GTE 6208 |
| 20 min | 27,57 | 29,60 |
| 24 h | 34,63 | 31,26 |
| 72 h | 32,58 | 30,70 |

In general it could be observed that the 90° peel values of example 1 after 72 h on all three automotive clear coats were higher than for the benchmark Acrylic Foam Tape GTE 6208. Furthermore, example 1 showed a continuous build-up of peel adhesion strength.

The static shear values on automotive clear coat UreGloss with a 500 g weight @ at 70 °C revealed 10,000+ min for both test samples - example 1 and Acrylic Foam Tape GTE 6208. Thus it could be shown that on the most critical automotive clear coat system UreGloss example 1 has comparable shear strength to Acrylic Foam Tape GTE 6208.

In the following table 6 , a comparison of the 90° peel adhesion values between example 1 (LSE optimized side) and 3M Acrylic Foam Tape Tape 5670 ,which is laminated with a acrylic pressure-sensitive adhesive optimized for bonding on polyolefine substrates, is shown on different low surface energy (LSE) surfaces after a dwell time of 24 hours. Per example three test samples were measured and the results averaged and reported in N/12.7mm.

**Table 6**

| | Example 1 | 5670 |
|---|---|---|
| PE-plate | 10,06 | 7,74 |
| PE-foil, smooth side | 13,81 | 5,39 |
| PE-foil, rough side | 28,20 | 19,75 |
| PP-plate | 8,38 | 11, 16 |
| PP-foil | 15,23 | 17, 61 |

Hence it could be shown that on polypropylene (PP) and polyethylene (PE) surfaces similar results to 5670 could be achieved. On PE surfaces example 1 displays better results than Acrylic Foam Tape 5670, on PP surfaces the values are marginal lower than those of Acrylic Foam Tape 5670. For body side molding applications example 1 would therefore be a good option to adhere without primer to PP/EPDM surfaces.

90°-Peel adhesion values of example 2 having a PSA side optimized for Automotive clear coats versus a with AR-7 acrylic pressure-sensitive adhesive laminated Acrylic Foam tape available as GTE 6212 (benchmark) from 3M to three different automotive clear coats are listed in the three tables (Tables 7 to 9) below. 90° Peel adhesion was measured after test sample dwell times of 20 minutes, 24 hours and 72 hours at 23 °C +/-2 °C. Per example three test samples were measured and the results averaged and reported in N/12.7 mm.

**Table 7**

| Test panel substrate: UreGloss coated | | |
|---|---|---|
| Dwell time | Example 2 | GTE 6212 |
| 20 min | 21,24 | 19,38 |
| 24 h | 28,52 | 18,63 |
| 72 h | 27,94 | 20,44 |

**Table 8**

| Test panel substrate: CeramiClear5 coated | | |
|---|---|---|
| Dwell time | Example 2 | GTE 6212 |
| 20 min | 23,24 | 24,51 |
| 24 h | 33,78 | 29,56 |
| 72 h | 36,53 | 30,16 |

**Table 9**

| Test panel substrate: VW2K coated | | |
|---|---|---|
| Dwell time | Example 2 | GTE 6212 |
| 20 min | 29,63 | 33,88 |
| 24 h | 37,10 | 37,01 |
| 72 h | 42,09 | 35,46 |

In general it could be observed that the 90° peel adhesion values after 72 hours on all three automotive clear coats were higher for example 2 than for benchmark Acrylic Foam Tape GTE6212. Furthermore example 2 shows a very high 90° peel adhesion on the most difficult automotive clear coat system UreGloss if compared to GTE 6212.

The next comparison in table 10 shows the 90° peel adhesion results between example 2 (LSE optimized side) and 3M Acrylic Foam Tape GTE6112 ,which is laminated a acrylic pressure-sensitive adhesive to bond on polyolefine substrates. All peel adhesion values shown in table 10 were measured after a dwell time of 24 hours. Per example three test samples were measured and the results averaged and reported in N/12.7mm

**Table 10**

| | Example 2 | GTE 6112 |
|---|---|---|
| PE-plate | 11,58 | 7,14 |
| PE-foil,smooth side | 14,89 | 6,97 |
| PE-foil,rough side | 43,52 | 23,02 |
| PP-plate | 14,73 | 7,76 |
| PP-foil | 19,33 | 18,85 |

These results show that on all low energy surfaces example 2 has higher 90° peel adhesion values than laminated Acrylic Foam Tape GTE 6112. On the structured PE surface values over 40 N/12.7 mm could be reached.

For comparative reasons, single layers of the liquid precursor 1 and liquid precursor 2 were prepared in a thickness of 1.2 mm and tested according to upper 90° peel adhesion test on the given substrates after a sample dwell time of 24 hours.

Per example three test samples were measured and the results averaged and reported in N/12.7mm. Test results are shown in Table 11.

**Table 11**

| | Liquid Precursor 1 | Liquid Precursor 2 |
|---|---|---|
| UreGloss | 19,05 | 16,34 |
| CeramicClear5 | 21,5 | X |
| PE-foil, smooth side | 3,57 | 16,01 |
| PE-foil, rough side | 9,72 | 42,42 |
| PE-plate | 6,26 | 10,47 |
| PP-plate | 3,93 | 12,31 |
| PP-foil | 7,28 | 16,43 |

The static shear values on automotive clear coat UreGloss and on a standard stainless steel substrate for the single layers of the liquid precursor 1 and liquid precursor 2 are shown in table 12. Per testing substrate 3 sampels were run and the test results averaged and reported in minutes.

**Table 12: Shear values (in minutes)**

| Test substrate | Liquid precursor 1 | Liquid precursor 2 |
|---|---|---|
| UreGloss | 10000+ | 29,95 |
| CeramicClear5 | 10000+ | 140,4 |

This comparison shows the superior adhesion of liquid precursor 1 on low surface energy (LSE) substrates. These values also show that surprisingly, the adhesion strength of the inventive multilayer films is higher than the adhesive strength of the single layer films although the adhesive composition of the tested surfaces is identical.

In the following table 13, the 90°-Peel adhesion values and static shear values @ 70 °C of example 1 and Acrylic Foam Tape GTE 6208 after a dwell-time of 24 hours on automotive clear coat UreGloss are shown:

**Table 13**

| Test panel substrate: UreGloss coated | | |
|---|---|---|
| | Example 1 | GTE 6208 |
| Peel (N/12,7 mm) | 12,40 | 20,75 |
| Staticshear (min) | 10000+ | 10000+ |

The following table 14 represents the results of the 90°-peel adhesion values of example 3 versus Benchmark Acrylic Foam Tape 5670 on different polyolefine substrates after a dwell time of 24 hours:

**Table 14**

| Peel in N/12.7mm | Example 3 | 5670 |
|---|---|---|
| PE-plate | 10,06 | 7,74 |
| PE-foil, smooth side | 14,23 | 5,39 |
| PE-foil, rough side | 37,47 | 19,75 |
| PP-plate | 11,20 | 11,16 |
| PP-foil | 15,54 | 17, 61 |

## Claims

**1.** A multilayer pressure sensitive adhesive (PSA) film having adhesive properties at its first and second main surface, wherein the film comprises at least two superimposed layers of a polymeric pressure sensitive adhesive foam material and optionally one or more intermediate layers of a polymeric foam material, **characterized in that** the pressure sensitive adhesive (PSA) film is obtainable by a continuous self-metered process comprising the steps of
(a) providing a substrate,
(b) providing two or more coating knives which are offset, independently from each other, from said substrate to form a gap normal to the surface of the substrate,
(c) moving the substrate relative to the coating knives in a downstream direction,
(d) providing curable liquid precursors of the polymeric pressure sensitive adhesive foam materials and optionally of the polymeric foam material to the upstream side of the coating knives thereby coating the two or more precursors through the respective gaps as superimposed layers onto the substrate,
(e) optionally providing one or more protective liners and applying these along the upstream side of the coating knives, and
(f) curing the precursor of the multilayer film thus obtained, wherein a lower layer of the curable liquid precursor is covered by an adjacent upper layer of the curable liquid precursor, essentially without exposing said lower layer of a curable liquid precursor.

**2.** The pressure sensitive adhesive (PSA) film according to claim 1, **characterized in that** the intermediate layer is a polymeric pressure sensitive adhesive foam material.

**3.** The pressure sensitive adhesive (PSA) film according to claim 1 or 2, **characterized in that** each of the layers is connected directly to the adjacent layer(s).

**4.** The pressure sensitive (PSA) film according to any of the preceding claims, **characterized in that** the film is free from an interior continuous carrier foil, especially in the form of a polymeric or metal foil.

**5.** The pressure sensitive (PSA) film according to any of the preceding claims, **characterized in that** the film comprises one or more permeable reinforcement layers.

**5.** The pressure sensitive (PSA) film according to any of the preceding claims, **characterized in that** at least two of the layers have a different composition, in particular two adjacent layers.

**6.** The pressure sensitive (PSA) film according to any of the preceding claims, **characterized in that** the polymeric pressure sensitive adhesive foam material at the first main surface is a high-energy-surface adhesive and the polymeric pressure sensitive adhesive foam material at the second main surface is a low-energy-surface adhesive.

**7.** The pressure sensitive adhesive(PSA) film according to any of the preceding claims, **characterized in that** the polymeric pressure sensitive adhesive foam material and/ or the polymeric foam material contains a polymer base material which is independently selected from the group comprising acrylic resins, styrene-butadiene rubbers, α-olefin polymers like polyethylene or polypropylene, polyurethanes, polyamines, polyesters, polyethers, polyisobutylene, vinylic compounds, polyamides or combinations thereof.

**8.** The pressure sensitive adhesive (PSA) film according to any of the preceding claims, **characterized in that** the polymeric pressure sensitive adhesive foam material and/ or the polymeric foam material contains cavities in the form of hollow microspheres, glass bubbles, expandable microspheres, in particular hydrocarbon filled expandable microspheres or gaseous cavities, hollow inorganic particles, expanded inorganic particles, or any combination thereof.

**9.** The pressure sensitive adhesive (PSA) film according to any of the preceding claims, **characterized in that** the polymeric pressure sensitive adhesive foam material and/ or the polymeric foam material contains an additive which is selected from the group comprising softeners, hardeners, filler materials, tackifiers, colorants, pigments, conservatives, solvents, rheology modifiers, UV-stabilizers, initiators, crosslinking agents, thixotropic agents surface additives, flow additives, nanoparticles, degassing additives, antioxidants, fire retardents, reinforcing agents, toughening agents, hydrophobic or hydrophilic silica, calcium carbonate, glass or synthetic fibers, or any combination thereof.

**10.** The pressure sensitive adhesive (PSA) film according to any of the preceding claims, **characterized in that** each layer has a thickness of 25 to 3,000 µm, in particular 75 to 2,000 µm.

**11.** The pressure sensitive adhesive (PSA) film according to any of the preceding claims, **characterized in that** the pressure sensitive adhesive (PSA) film comprises a protective liner on one or both main surfaces.

**12.** Use of a pressure sensitive adhesive (PSA) film according to any of claims 1 to 11 for adhering automotive body side moldings to vehicles and other...)

**13.** A continuous self-metered process for manufacturing a multilayer pressure sensitive adhesive (PSA) film according to any of the claims 1 to 11, the process comprising the steps of
(a) providing a substrate,
(b) providing two or more coating knives which are offset, independently from each other, from said substrate to form a gap normal to the surface of the substrate,
(c) moving the substrate relative to the coating knives in a downstream direction,
(d) providing curable liquid precursors of the polymeric pressure sensitive adhesive foam materials and optionally of the polymeric foam material to the upstream side of the coating knives thereby coating the two or more precursors through the respective gaps as superimposed layers onto the substrate,
(e) optionally providing one or more protective liners and applying these along the upstream side of the coating knives, and
(f) curing the precursor of the multilayer film thus obtained, wherein a lower layer of the curable liquid precursor is covered by an adjacent upper layer of the curable liquid precursor, essentially without exposing said lower layer of a curable liquid precursor.
